# EUROPEAN PATENT APPLICATION

(11) **EP 0 873 010 A1**
(43) Date of publication of application: **21.10.1998**
(21) Application number: 97201124.1
(22) Date of filing: 18.04.1997
(51) Int. Cl.: H04N 5/225

(54) **Lens assembly and housing for a video camera**

(71) Applicant: Fifty Cycle Video Laser Device Co. Ltd., Shinjung City, Taipei Hsein (TW)
(72) Inventor: Wen, Tien-Chi, Shinjuang City, Taipei Hsein, Taiwan (TW)
(74) Representative: De Hoop, Eric

(57) **Abstract**

A lens assembly for a digital signal processing video camera is disclosed, wherein the digital signal processing camera includes a front housing defining (10) a front hole (12) and a bottom opening (14), a rear housing (20) fixedly connected to the front housing and having a stand (30), and an image receiver (71) which is attached to a printed circuit board (70) fixedly mounted in the front housing. The lens assembly includes a transparent dust-proofing cover (10) attached to the front housing and covering the front hole, a mounting seat (60) fixedly attached to the printed circuit board and defining an inner threading (64) a lens-holding sleeve (50) defining an outer threading (52) threadedly engaged with the inner threading, a lens (51) fixedly received in the lens-holding sleeve and located between and in alignment with the image receiver and the front hole, a focus ring (40) fixedly fitted with the lens-holding sleeve and having a circumferential periphery with a portion protruding from the bottom opening of the front housing.

## Description

### FIELD OF THE INVENTION

The present invention is related to a lens assembly, particularly to a lens assembly for a digital signal processing camera, wherein a lens thereof is protected from dust and an adjustment of the focus of the lens can be easily achieved without the fear that the user's fingers may unintentionally contaminate the lens.

### BACKGROUND OF THE INVENTION

For computer video conferencing or a computer real-time image transmission, in addition to computers, a digital signal processing camera is needed. Such a camera is equipped with a microphone, whereby video and audio signals can be transmitted simultaneously. Since. the digital signal processing camera should be mounted on a monitor, the digital signal processing camera must have a simple and compact structure. To meet the requirements of being a simple and compact structure, a lens of a lens assembly of the conventional digital signal processing camera which is mounted on a mounting seat is exposed to the environment whereby dust may fall onto the lens. Furthermore, since a user must directly rotate a sleeve holding the lens to adjust the focus of the lens of the conventional digital signal processing camera, the lens may be contaminated by the user's finger(s) when the lens is unintentionally contacted by the user's finger(s).

The present invention therefore is aimed to provide an improved lens assembly for a digital signal processing camera to mitigate and/or obviate the aforementioned problems.

### SUMMARY OF THE INVENTION

An objective of the present invention is to provide a lens assembly for a digital signal processing assembly, wherein a lens of the lens assembly is protected from dust and adjustment of the focus of the lens will not cause any contamination of the lens, while the digital signal processing still can have the advantage of being a compact and simple structure.

Other objects, advantages, and novel features of the invention will become more apparent from the following detailed description when taken in conjunction with the accompanying drawings.

### BRIEF DESCRIPTION OF THE DRAWINGS

Fig. 1 is a front-right-top exploded view showing the elements constituting a digital signal processing camera which has a lens assembly in accordance with the present invention;
Fig. 2 is a perspective view showing the digital signal processing camera in an assembled state;
Fig. 3 is a partially cut-away side view showing that a lens of the lens assembly in accordance with the present invention is at a first position; and
Fig. 4 is a view similar tO Fig. 3 but showing that the lens is moved to a second position to change the focus of the lens.

### DETAILED DESCRIPTION OF THE PREFERRED EMBODIMENT

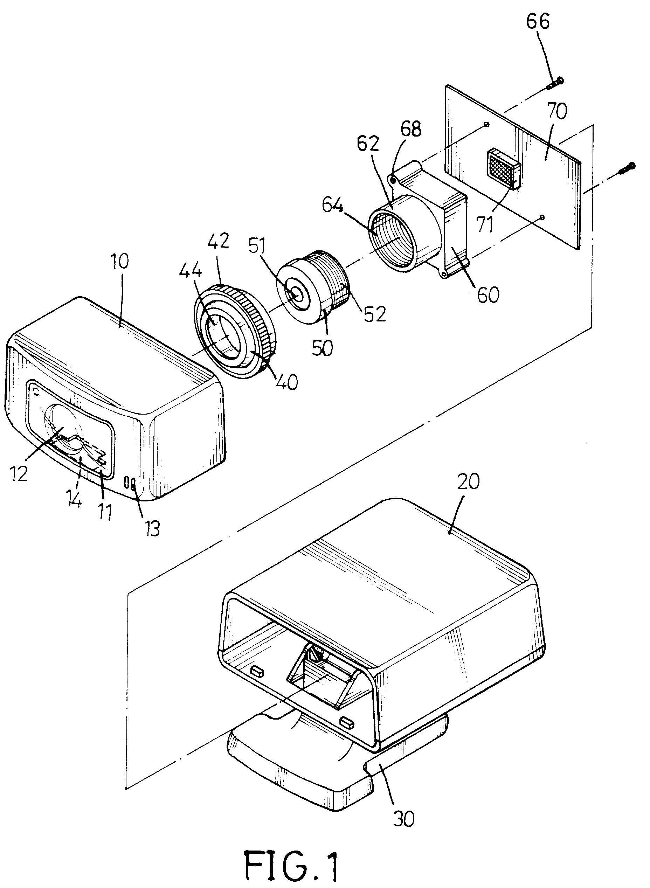

Referring to the drawings and particularly to Fig. 1, a digital signal processing camera generally includes a front housing 10 attached with a transparent dust-proofing cover 11, a focusing ring 40, a lens 51 fixedly held in a lens-holding sleeve 50, a mounting seat 60, an image receiver 71 fixedly attached to a printed circuit board 70 and a rear housing 20. The cover 11, the focusing ring 40, the lens 51, the lens-holding sleeve 50 and the mounting seat 60 constitute a lens assembly in accordance with the present invention.

The front housing 10 is formed with a front circular hole 12 aligning with a center of the dust-proofing cover 11, the lens 51 and the image receiver 71 when. the elements constituting the digital signal processing camera are assembled, whereby an image in front of the camera can pass through the dust-proofing cover 11 to enter the lens 51 and be received by the image receiver 71. The image receiver 71 converts the received image into an electric signal which after being processed by control chip(s) (not shown) on the printed circuit board 70 is outputted to a computer to be used thereby.

A microphone 13 is mounted in a corner of the front housing 10, whereby audio signal can also be received by the digital signal processing camera.

A bottom opening 14 is provided in a bottom of the front housing 10. A stand 30 is provided at a bottom of the rear housing 20.

The focusing ring 40 has a plurality of serrations 42 formed around its circumferential periphery to facilitate a user to grasp the focusing ring 40 for rotation thereof. A mounting hole 44 is defined in a center of the focusing ring 40. An outer threading 52 is formed on a rear portion of the lens-holding ring 50. A cylinder 62 is formed on a front of the mounting seat 60, wherein the cylinder 62 defines an inner threading 64.

When assembling the digital signal processing camera, firstly, the mounting seat 60 is attached to the printed circuit board 70 by extending two screws 66 through the printed circuit board 70 to be threadedly. received in two holes 68 defined in the mounting seat 60. Then, the lens-holding sleeve 50 is brought to be mounted on the mounting seat 60 by threadedly engaging the outer threading 52 of the lens-holding sleeve 50 with the inner threading 64 of the cylinder 62 of the mounting seat 60, in which the lens 51 is aligned with the image receiver 71.

Thereafter, the focus ring 40 is brought to be assembled with the lens-holding sleeve 50 by forcedly fitting a front end of the lens-holding sleeve 50 into the mounting hole 44 of the focus ring 40, whereby when the focus ring 40 is rotated, the lens-holding sleeve 50 together with the lens 51 can rotate together with a linear movement relative to the mounting seat 60, so that the distance between the lens 51 and the image receiver 71 can be changed.

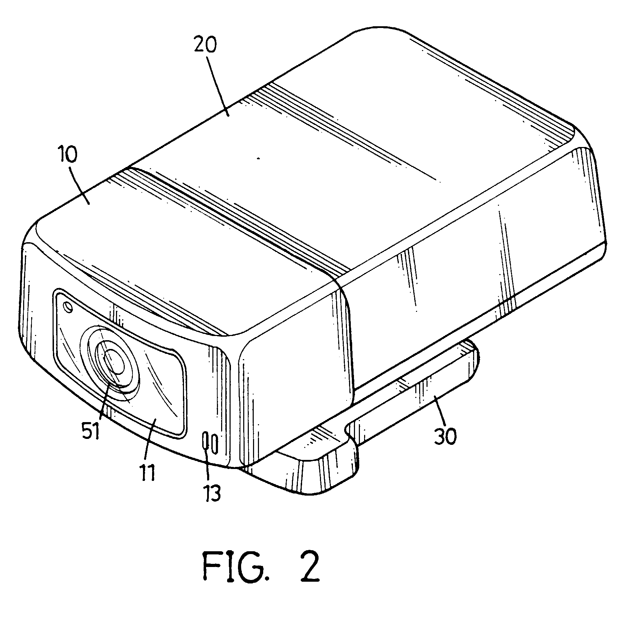

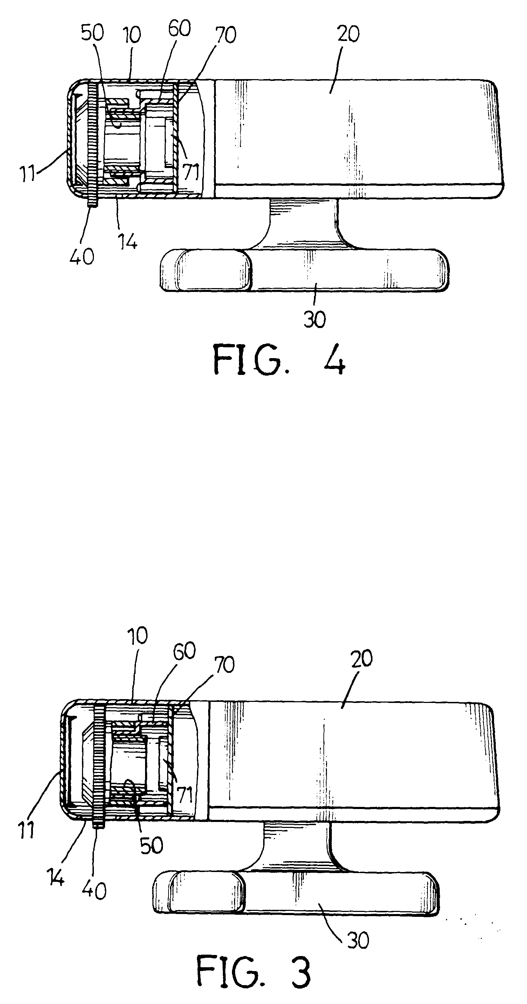

After the mounting seat 60, the lens-holding sleeve 50 which holds the lens 51 and the focus ring 40 are assembled together and mounted on the printed circuit board 70, the printed circuit board 70 is brought to be fixedly mounted in the front housing 10 by a known manner, for example, gluing, in which the lens 51 is aligned with the front hole 12 defined in a front wall of the front housing 10 (better seen in Fig. 2) and a portion of the circumferential periphery is protruded from the bottom opening 14 of the front housing 10 (better seen in Figs. 3 and 4). Finally, the rear housing 20 is brought to be assembled with the front housing 10 by a known manner to complete the digital signal processing camera as shown by Fig. 2. From Fig. 2, it can be clearly seen that the lens 51 is protected by the transparent dust-proofing cover 11 so that dust is prevented from directly falling onto the lens 51.

Referring to Figs. 3 and 4, it can be clearly seen that to adjust the focus of the lens the user only needs to rotate a portion of the circumferential periphery of the focus ring 40 protruding from the bottom hole 14 of the front housing 10. Thus, unintentional contact of the user's finger(s) with the lens 51 when adjusting the focus of the lens 51 is avoided.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. A lens assembly for a digital signal processing camera, said camera comprising a housing in which a printed circuit board attached with an image receiver is mounted, said housing defining a front hole in alignment with the image receiver and an opening, said lens assembly comprising:
a mounting seat fixedly attached to the printed circuit board;
a lens-holding sleeve threadedly engaging with the mounting seat;
a lens fixedly held in the lens-holding sleeve and located between and in alignment with the front hole and the image receiver;
a focusing ring fixedly fitted with the lens-holding sleeve and defining a circumferential periphery having a portion protruding from the opening; and
a transparent dust-proofing cover covering the front hole.

2. The lens assembly in accordance with Claim 1, wherein the mounting seat is fixedly attached to the printed circuit board by extending two screws through the printed circuit board to be threadedly received in the mounting seat.

3. The lens assembly in accordance with Claim 1, wherein the mounting seat is formed with a cylinder defining an inner threading and the lens-holding sleeve defining an outer threading threadedly engaging with the inner threading.

4. The lens assembly in accordance with Claim 1, wherein the circumferential periphery of the focusing ring is formed with a plurality of serrations.
